# EUROPEAN PATENT SPECIFICATION

(11) **EP 4 020 429 B1**
(45) Date of publication and mention of the grant of the patent: **17.07.2024**
(21) Application number: 20306666.7
(22) Date of filing: 22.12.2020
(51) Int. Cl.: H04W 88/04, G08G 1/16, H04W 4/40

(54) **VRU PARAMETER UPDATE**
VRU-PARAMETERAKTUALISIERUNG
MISE À JOUR DE PARAMÈTRE DE VRU

(43) Date of publication of application: 29.06.2022
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: KHANFOUCI, Mourad, 35708 RENNES Cedex 7 (FR); GRESSET, Nicolas, 35708 RENNES Cedex 7 (FR); CIOCHINA, Cristina, 35708 RENNES Cedex 7 (FR)
(74) Representative: Plasseraud IP

(56) References cited:
- WO-A1-2018/128946
- US-A1- 2019 159 084
- NISHANTHI DASANAYAKA ET AL: "Enhancing Vulnerable Road User Safety: A Survey of Existing Practices and Consideration for Using Mobile Devices for V2X Connections", ARXIV.ORG, CORNELL UNIVERSITY LIBRARY, 201 OLIN LIBRARY CORNELL UNIVERSITY ITHACA, NY 14853, 29 October 2020 (2020-10-29), XP081801580
- FBCONSULTING S A R L: "Draft - DTS/ITS-001991 v0.5.0 (TS 103 300-3 ) VRU basic service", vol. TC ITS Intelligent Transport Systems, no. .5.0, 12 October 2020 (2020-10-12), pages 1 - 108, XP014383878, Retrieved from the Internet <URL:docbox.etsi.org/ITS/ITS/05-CONTRIBUTIONS/2020/ITS(20)040021_Draft_-_DTS_ITS-001991__v0_5_0__TS_103_300-3____VRU_basic_se/ITS-001991v050.docx> [retrieved on 20201012]

## Description

The present invention generally relates to the domain of device-to-device telecommunication system, and more specifically to vulnerable road user avoidance methods.

In these methods the vulnerable road user (VRU) broadcasts a VRU Awareness Messages (VAM) that includes the VRU position, the VRU speed and various VRU related information. A vehicle in the coverage area of the VRU receives the VAM message, discovers the VRU and evaluates the risk of collision associated with the VRU. To perform such methods it is required that the VRU and the vehicle receive from an application server specific information. For example, the application server transmits resource planning to the vehicle and to the VRU to inform them of the radio resources to be used to broadcast the VAM. This specific information requires the VRU to update the parameters related to the VRU avoidance method and the application server to update the status of the VRU. If the values of the parameters of the VRU do not correspond to the values of these parameters of the VRU status of the application server the VRU avoidance method cannot be correctly performed.

More precisely, in VRU avoidance methods, the VRU broadcast the VAM which is received by the application server. The VAM contains the current position of the VRU, the speed of the VRU and other VRU related information like the type of the VRU (for example, pedestrians or bicycle). Then the application server determines or updates the VRU status. That is, the application server updates the values of the parameters of the VRU status, which comprises for example:
- a parameter corresponding to an identification of the VRU,
- a parameter indicating the VAM reporting periodicity,
- synchronization information,
- radio resource planning for the VAM transmission,
- etc.

The application server may transmit to the VRU new values of the VRU's parameters according to the updated VRU status. For example, the application server may change an ID or the radio resources reserved for transmitting the VAM. When these parameters are changed, the application server transmits to the VRU their new value.

The application server transmits to the vehicle some information related to the new VRU status. The transmission of this information to the vehicle enables it to decode the radio resources in which the VRU transmits the VAM and therefore to discover the VRU. Based on the information received in the VAM the vehicle can evaluate the risk of collision with the VRU.

The values of the parameters of the VRU (that is the values on the VRU side) correspond to the values of these parameters of the VRU status (that is the values stored on the side of the application server) otherwise the application server will send to the vehicle information related to an incorrect VRU status. The vehicle will therefore not be able to implement the VRU avoidance method. VRU avoidance methods, thus, require the VRU to maintain connectivity with this application server. However, maintaining such connectivity may be difficult especially when the VRU is moving.

Examples and possible embodiments of the prior art may be found in documents US2019/159084, WO2018/128946A1 and "Enhancing Vulnerable Road User Safety: A Survey of Existing Practices and Consideration for Using Mobile Devices for V2X Connections" (NISHANTHI DASANAYAKA et Al).

The present invention aims at improving the situation.

To that end, the invention is defined by the appended independent claims. Dependent claims constitute embodiments of the invention.

Therefore, when connectivity cannot be maintained between the first UE (corresponding to the VRU) and the application server is relayed by the second UE (corresponding to a vehicle which may as well be a VRU). That is, the second UE may perform at least part of the service performed by the application server during the time the application server and the first UE cannot exchange data. For example, based on the information related to a value of the VRU parameter, the second UE may maintain the VRU status of the VRU updated or may transmit this information to the application server which may maintain the VRU status of the VRU updated. More specifically, if the information related to a value of the VRU parameter indicates a different value than the value of the parameter of the VRU status, the VRU status is not up to date and the second UE, or the application server, may update the value of the parameter in the VRU status. If the information related to a value of the VRU parameter indicates a value identical to the value of the parameter of the VRU status (or simply confirms that the value has been updated according to the information of the second message), the VRU status is up to date no specific action needs to be taken by the second UE regarding the VRU status, however, the second UE may transmit the information related to the value of the VRU to the application server and/or other UE.

Therefore, the VRU status, which is held by the application server when connection with the first UE is maintained, is held by the second UE and/or by the application server (information is then relayed to the application server via the second UE) when the application server cannot receive the VAM properly from the first UE.

The second UE may relay the application server on only part of the status or even on only one parameter, that is, the first message only concerns one VRU parameter of the first UE. However, this first message or another message received by the second UE from the application server may concern more than one VRU parameter of the first UE or even all the parameters of the status.

More generally, the VRU status may be maintained by the second UE rather than by the application server, thus the second UE fully relays the application server, which is advantageous when the connection between the second UE and the application server cannot be maintained. The VRU status may also be maintained by the application server, thus the second UE mainly relays the application server to transmit the information related to the VRU parameter to the first UE and eventually to transmit the information related to a value of the VRU parameter to the application server. The VRU status may be maintained by both the application server and the second UE, thus, the second UE, in addition to updating the status on its side, transmits the information related to the VRU parameter to the first UE and transmits the information related to a value of the VRU parameter to the application server. In addition to any of these possibilities, another UE may also maintain the VRU status, therefore the application server transmits to this another UE the same message it sends to the second UE when the second UE maintains the status as it will be seen with the third UE and the second UE sends to this another UE the information related to a value of the VRU parameter to the application server as it will also be seen with the third UE.

When the status is maintained by another entity than the application server, the first message (or an equivalent message sent to another UE when it is maintained by this another UE) may include information related to other VRU parameters, eventually all the VRU parameters of the VRU. The another UE may be considered as the third UE in the following.

The invention thus avoids slow VRU discovery by the other vehicles due to VRU parameter mismatch between the VRU and the other vehicles due for example to unavailability of a connection with the application server. Therefore, latency is reduced when performing a VRU avoidance method.

By VRU avoidance method it is understood any method which enables a vehicle (for example corresponding to the second or third UE) to estimate the probability of a collision with the VRU, and eventually to alert the driver of the vehicle.

By vulnerable road user it is understood any user of space shared with motorized vehicles (for example roads) or dedicated to motorized vehicles (for example highways) and/or user of the space near those space (for example sidewalks) that could suffer from a collision with these motorized vehicles. It is for example, pedestrians, motorcycle, bicycle, etc. Vulnerable road user may also be defined according to ITS Directive as all the nonmotorized road users (such as pedestrians and cyclists), the motorcyclists and people with disabilities or reduced mobility and orientation whatever vehicle they are driving. Vulnerable road user may also be understood as defined by the ETSI in its report "Intelligent Transport System (ITS); Vulnerable Road Users (VRU) awareness; Part 1: Use Cases definition; Release 2" (ETSI TR 103 300-1 V2.1.1) which considers the user but also the situation of this user in its environment (see table 4 of the ETSI report).

By VRU application server it is understood the server which manages and/or provides the VRU service (which is an VRU avoidance method), that is, the service which aims at minimizing the conflict between VRUs and the other vehicles.

By vulnerable road user parameter of a VRU it is understood a parameter for which a value specific to the VRU is determined either by the VRU its self (for example, speed or position) or by the VRU application server (for example, application ID of the VRU) and/or by the UE which relays the VRU application server. The VRU status (which is held by the VRU application server and/or by another UE which relays the VRU application server such as the second UE) comprises the values specific to the VRU of each of the parameter of the VRU. The VRU status is held by the VRU application server and/or by any UE which relays the VRU application server. That is, the VRU status is stored and may be updated by the entity which holds the VRU status. The VRU status is specific to each VRU. The VRU itself may have a copy of the VRU status. However, the VRU stores the values of at least one of the parameters of the VRU status.

Updating such VRU parameters is understood as modifying the value of the parameter related (or specific) to the VRU either in the status and/or directly on the first UE.

By VRU corresponding to a user equipment (or a user equipment corresponding to the VRU) it is understood the VRU transporting the UE.

By vehicle-to-everything communication system it is understood a computer networks in which vehicles and roadside units are the communicating nodes enabling at least to perform communications between the UEs of the vehicles, the UEs of the VRUs and the VRU application servers of this network.

By information related to the VRU parameter it is understood any information related to the VRU parameter, for example, the value of that parameter in the VRU status (on the application server side), the value to which the application server requires the first UE to update the parameter (on the UE side), a request intended to the first UE to send the value to which is set the parameter (on the UE side), etc.

By device to device communication (D2D) it is understood a direct communication between two UE.

The transmission of the second message from the second UE to the first UE may be performed after a radio discovery of the first UE by the second UE to establish a communication channel. For example, the first UE broadcasts a VAM through specific radio resources which are decoded by the second UE leading to the reception of the VAM when the second UE and the first UE are close enough to each other.

The transmission of the third message from the first UE to the second UE may be performed via any type of communication, for example, through a device-to-device communication or through a cellular communication network.

According to an aspect of the invention, the method further comprises determining by the application server that the second UE is at a distance from the first UE under a threshold and/or that under a predetermined duration the second UE will be at a distance from the first UE under the threshold.

Therefore, the second UE is more likely to be able to perform the D2D communication with the first UE (for example, after a discovery procedure) when the second UE is chosen near the first UE or will be more likely to be able to perform the D2D communication with the first UE if it is heading towards the first UE.

Any methods can be used to determine that the second UE is at a distance from the first UE under a threshold or that the second UE will be at a distance from the first UE under the threshold. For example, the application server may use a positioning system (for example, GPS, internet geolocation, Radiolocation, etc) or the application server may deduce the position and/or the path of the first UE based on previous D2D exchanges between the second UE and other UEs in the network. The position of the first UE may be assimilated to the last position reported to the application server through the VAM, this position may be improved with the information regarding the last speed of the first UE reported to the VRU application server.

According to an aspect of the invention, the method further comprises transmitting by the second UE to a third UE corresponding to another vehicle and being in the V2X communication system a fifth message including information related to the value of the VRU parameter of the first UE.

Therefore, the second UE transmits a message including information related to the value of the VRU parameter based on the information received via the third message. This enables the third UE to have the last updated value of the VRU parameter and therefore if the third UE, which corresponds to another vehicle, relays the application server as the second UE did he will be able to update the status or at least the VRU parameter even if the application server did not receive the information related to a value of the VRU parameter (which may happen when the second UE lost its connection with the application server, for example, when the first and the second UE are in a zone which is underserved in the cellular network due for example to the environment). This also reduces the latency between the time the second UE receives the third message and the time the third UE receives the information related to the value of the VRU parameter, which is especially advantageous in the vehicles are driving in the same direction requiring fast update to perform the VRU avoidance method.

The transmission between the second UE and the third UE can be of any type, for example, through a device-to-device communication (which offers the best reduction of latency) or through a cellular communication network (which still reduces the latency since the application server does not process the information).

According to an aspect of the invention, the method further comprises transmitting by the second UE to the application server a fourth message including information related to the value of the VRU parameter of the first UE.

Therefore, the application server may update or validate the update of the status that it holds. Thus, when the connection with the first UE returns the application server may proceed with the normal update procedure based on the last updates of the VRU status. If the connection with the first UE does not return, the application server may also be relayed by another UE based on the last updated status.

According to an aspect of the invention, the method further comprises updating by the first UE the parameter to the value based on the information related to the VRU parameter.

This is the case when the parameter involved is managed by the application server, for example, the VRU ID (also called application ID since this ID is related to the application layer) of the first UE, which may not be the case for example with the parameter corresponding to the position of the VRU. The information related to the VRU parameter may therefore include the value to which the first UE updates the parameter. In addition, the information related to the VRU may also include an update command which commands the VRU (the first UE) to update the VRU parameter according to the value. Alternatively, the first UE may be configured to update to the value received when this value refers to specific VRU parameters.

According to an aspect of the invention, the method further comprises setting by the application server the VRU parameter of the VRU status of the first UE to an updated value based on the information related to the value.

This is the case when the parameter involved is managed by the first UE, for example the parameter corresponding to the position or the speed or the trajectory of the VRU. The information related to the value is sent by the second UE in the third message.

Alternatively or in complementary, setting the VRU parameter of the VRU status of the first UE to an updated value based on the information related to the value may be done by the second UE (or by the third UE when the fifth message is sent to it) when the VRU status is held by the second UE. Therefore, the transmission of the fourth message is not necessary. However, the VRU status may be held by several entities, that is, at least by the application server and the second UE or another UE (for example, the third UE).

According to an aspect of the invention, the information related to the VRU parameter comprises a previous to update value of the VRU parameter of the VRU status and further comprising comparing by the first UE the previous to update value with the value of the VRU parameter of the first UE.

Therefore, the first UE may determine if the value of the VRU parameter of the VRU status is up to date or not, if it is not up to date, the first UE may indicate it in the third message.

In any case, the third message including information related to a value of the VRU parameter of the first UE is sent:
- when the parameter is managed by the application server: to transmit the value to which the first UE has updated the VRU parameter, when the first UE does not update to the value instructed by the application server, or to transmit only a confirmation that the value has been updated;
- when the parameter is managed by the application server: to transmit the value to which the VRU application server (or the UE which relays the VRU application server) updates the VRU parameter.

According to an aspect of the invention, the method further comprises transmitting by the application server to the second UE and/or to the third UE, the first message when the application server does not receive or does not receive in time from the first UE a sixth message including information related to the VRU parameter of the first UE.

Therefore, the second UE and/or the third UE (that is, the another UE) relay the application server when the connection with the first UE cannot be maintained. This reduces the data exchanged between the application server and the UEs that may relay it, and reduces the data to be stored by these UEs. However, the relay of the application server may be implemented on a permanent basis to ensure less delay for updating the status when the first UE loses its connection to the application server. The sixth message may be any type of message, for example, a broadcast message or a point-to-point message. By losing connection between the first UE and the application server it is understood that the application server no longer receives the sixth message or message like the sixth message from the first UE. When the sixth message is a broadcast message it may be a VRU Awareness Messages, VAM, that is, the message sent by the first UE to broadcast information (for example, the position of the VRU) to the proximate vehicles to enable them to perform a VRU avoidance method.

According to an aspect of the invention the VRU parameter is one among a position of the VRU, a speed of the VRU, a movement direction of the VRU, a VRU group ID, VRU identification information in the network as user terminal (UE), VRU application identification information in the application server or any other information for charactering the VRU group or cluster and/or the VRU application.

By position, speed and movement direction of the VRU it is understood the geographical position, speed and movement of the VRU which transports the first UE in the environment of the VRU. These values of these VRU parameters may be determined by the first UE directly or the first UE may transmit, for example, in the sixth message, data enabling the application server and/or the second UE and/or the third UE to determine these values. Any methods can be used to determine the values of these VRU parameters. For example, they can be obtained by using a positioning system (for example, GPS, internet geolocation, Radiolocation, etc) or obtained based on previous D2D exchanges between the second UE and other UEs in the network.

By VRU group ID it is understood an ID identifying the cluster of close VRUs in the region of the deployment of the network. The group is identified by its size, range and group head. The group head (one among the VRUs of the cluster) relays information locally to the VRU group members. The group ID may be for example an identifier to identify uniquely the group head in the network. This identifier is shared between the group head and the VRU group members. The group ID may be also defined by the application server to identify uniquely clusters of VRUs in the deployment.

By UE identification information (ID) it is understood any information which enables the application server and/or the second UE and/or the third UE and more generally any entities involved in the service to identify the first UE. This ID is therefore involved in identification at the level of the application layer. This ID is determined and/or attributed by the application server and/or the UE which relays the application server.

Other parameters may be related to the identification of the VRU application. In this case, multiple VRU application can be deployed for the VRUs. The VRU application may be related to the class information. An application may be used for example for pedestrians and another one may be defined for cyclists or motorcyclists.

According to an aspect of the invention the device to device communication is established based on communication parameters transmitted by the application server.

This enables the second UE to set up a communication channel with the first UE. These communication parameters correspond for example to the radio resources that will be used by the first UE to send a VAM based on which the second UE discovers the first UE. These communication parameters may be transmitted in the first message.

A second aspect of the invention concerns a user equipment, UE, configured to relay a vulnerable road user, VRU, application server for updating a vulnerable road user parameter of a VRU corresponding to another user equipment, UE, in a vehicle-to-everything, V2X, communication system, the UE corresponds to a vehicle and is in the V2X communication system, said UE comprises:
a processor; and
a non-transitory computer-readable medium comprising instructions stored thereon, which when executed by the processor configure the UE to:
   receive a first message including information related to the VRU parameter of the another UE, said information being generated by an application server based on a VRU status of the another UE;
   transmit to the another UE a second message including the information related to the VRU parameter via a device to device communication;
   receive from the another UE a third message including information related to a value of the VRU parameter of the another UE via the device to device communication.

A third aspect of the invention concerns a method to relay a vulnerable road user, VRU, application server for updating a vulnerable road user parameter of a VRU corresponding to a first user equipment, UE, in a vehicle-to-everything, V2X, communication system, comprising:
transmitting by the VRU application server to at least the second UE a message including an information related to the VRU parameter of the first UE based on a VRU status of the first UE, said second UE corresponding to a vehicle and being in the V2X communication system;
receiving by the VRU application server from a least the second UE another message including information related to the value of the VRU parameter of the first UE.

According to an aspect of the invention, the method further comprises generating by the application server the information related to the VRU parameter of the first UE based on a VRU status of the first UE.

A fourth aspect of the invention concerns a vulnerable road user, VRU, application server configured to relay an application service to a second user equipment, UE, for updating a vulnerable road user parameter of a VRU corresponding to a first UE in a vehicle-to-everything, V2X, communication system, the UE corresponds to a vehicle and is in the V2X communication system, said VRU application server comprises:
a processor; and
a non-transitory computer-readable medium comprising instructions stored thereon, which when executed by the processor configure the VRU application server to:
   transmit to at least the second UE a message including an information related to the VRU parameter of the first UE based on a VRU status of the first UE, said second UE corresponding to a vehicle and being in the V2X communication system;
   receive from at least the second UE another message including information related to the value of the VRU parameter of the first UE.

A fifth aspect of the invention concerns a method to relay a vulnerable road user, VRU, application server for updating a vulnerable road user parameter of a VRU corresponding to a first user equipment, UE, in a vehicle-to-everything, V2X, communication system, comprising:
Receiving by the first UE from a second UE a message including an information related to the VRU parameter of the first UE via a device to device communication, said information being generated by an application server based on a VRU status of the first UE, said second UE corresponding to a vehicle and being in the V2X communication system;
Transmitting by the first UE to the second UE another message including information related to a value of the VRU parameter of the first UE via the device to device communication.

A sixth aspect of the invention concerns a user equipment, UE, client of a vulnerable road user, VRU, application server, said UE corresponds to a VRU and is in the V2X communication system, said UE comprises:
a processor; and
a non-transitory computer-readable medium comprising instructions stored thereon, which when executed by the processor configure the UE to:
   receive from another UE a message including an information related to a VRU parameter of the UE via a device to device communication, said information being generated by an application server based on a VRU status of the UE, said another UE corresponding to a vehicle and being in the V2X communication system;
   transmitting by the UE to the another UE another message including information related to a value of the VRU parameter of the UE via the device to device communication.

A seventh aspect of the invention concerns a computer program product comprising code instructions to perform the method as described previously when said instructions are run by a processor.

The present invention is illustrated by way of example, and not by way of limitation, in the figures of the accompanying drawings, in which like reference numerals refer to similar elements and in which:
- Figure 1 illustrates a system implementing an embodiment of the invention.
- Figure 2 illustrates a flowchart representing an embodiment of the invention.
- Figure 3 illustrates a VRU application server and a first UE and a second UE implementing an embodiment of the invention.

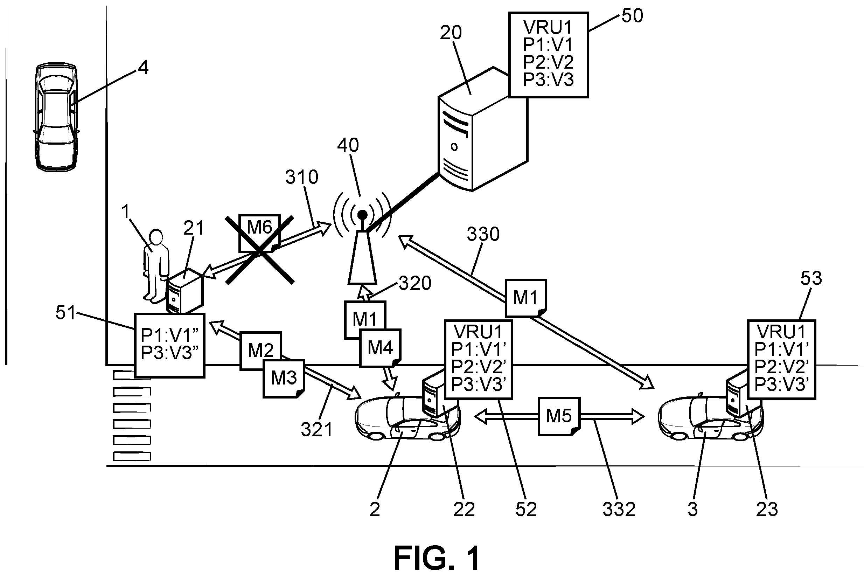

Referring to figure 1, it is shown a V2X communication system implementing an embodiment of the invention. In figure 1 there is shown a VRU 1 which is in this example a user of a space near a space used by motorized vehicles (sidewalk) and may eventually use the pedestrian crossing which is a space shared with motorized vehicles. Other vehicles which are motorized are also represented 2, 3 and 4. These vehicles 2, 3, 4 are using the roads and may eventually have a risk of collision with the VRU 1. For example, if VRU 1 crosses the road on the pedestrian crossing than the vehicles 2 and 3 which are heading in the direction of the pedestrian crossing may have a risk of collision with the VRU 1. The situation of the vehicle 4 and the VRU 1 may also present such risk if vehicle 4 turns on its left or if the VRU 1 crosses the road without using the pedestrian crossing.

The VRU avoidance method implemented by the V2X communication system involves a distributed VRU application on a client-server based model. A server part of this application is supported by a VRU application server 20.

The VRU 1 carries a UE, named first UE. The first UE supports the client 21 part of the VRU application.

The Vehicle 2 carries a UE, named second UE. The second UE supports also a client 22 part of the VRU application. In addition, the second UE may also support a server 22 part of the VRU application when the second UE replaces or duplicates the functions of the VRU application server. When the second UE acts as a relay for the transmission of messages and not replacing or acting as a server the second UE does not support a server part of the VRU application and only acts like an end point entity of the network when it is considered as a client.

The Vehicle 3 carries a UE, named third UE. The third UE supports also a client 23 part of the VRU application and may also support a server 23 part of the VRU application as it is done with the second UE.

The Vehicle 4 may be identical to the other vehicles (and may carry a UE which supports part of the VRU application), however, for the sake of simplicity figure 1 does not show these details.

Each of these entities (first UE, second UE, third UE and the VRU application server) may communicate via a network including a V2X communication system or any other communication system. For example, the communications 320, 330 established between the vehicles 2, 3 and the VRU application server 20 may be supported by a classical cellular communication network. For instance, a radio channel may be established between the base station 40 and the vehicles 2, 3 to support the communication between the vehicles 2, 3 and the VRU application server 20. The communications 320, 330 between the vehicles 2, 3 and the VRU application server 20 may as well use a satellite communication technic. The communication 310 between the VRU 1 and the VRU application server 20 may use the same technics as for the communications between the vehicles 2, 3 and the VRU application server 20 (satellite, cellular, etc).

The communication 321 between the VRU 1 and vehicle 2 is a D2D communication. However, part of the exchange (transmitting M3 from the first UE to the second UE) may be performed on another basis, for example, with the same technics used between the vehicles 2, 3 and the VRU application server 20. The communication 332 between the two vehicles 2 and 3 maybe based on the same technics used between the VRU 1 and the vehicle 2 (For example, a D2D communication).

The VRU application server 20 stores a status 50 of the VRU 1 comprising values (P1, P2, P3, etc) of the VRU parameters. These VRU parameters are used by the VRU 1 and by the vehicles 2, 3 or 4 to perform the VRU avoidance method. For example, P1 may be the UE identification information, P2 may be the VRU group ID and P3 may be the VRU position and speed of the VRU. The status 50 may comprise for each parameter (P1, P2 and P3) the values (V1, V2 and V3) corresponding to the VRU 1. When the second UE and/or the third UE of vehicles 2 or 3 at least partly replace or duplicate the service provided by the VRU application server 20, the servers 22 and/or 23 maintain a VRU status 52 and/or 53 of the VRU 1, that is, they store and if needed update the VRU status. When the second UE and/or the third UE of vehicles 2 or 3 do not replace or duplicate the service provided by the VRU application server 20 but only transmit the messages between the client 21 of the first UE and the VRU application server 20, the second UE and third UE may not maintain any status of the VRU 1.

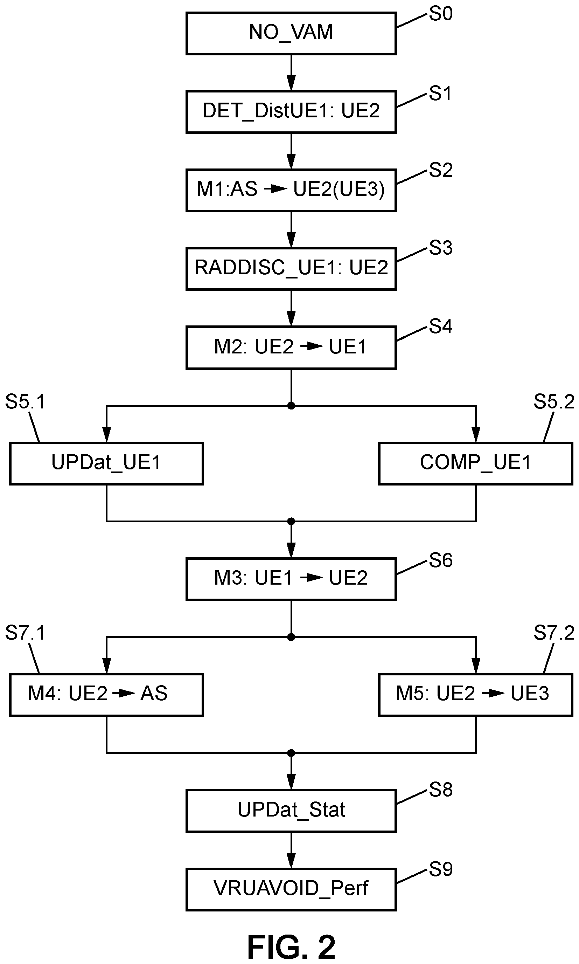

Referring to figure 2 there is shown a flowchart representing the steps of an embodiment according to the invention.

At step S0, the VRU application server 20 did not receive a VAM M6 from the first UE 61 which would have enabled it to update the VRU status 50. For example, a timer is started at the reception of the last VAM M6 received from the first UE 61 and no other VAM M6 is received when the timer ends. Thus, the connection between the VRU application server 20 and client 21 supported by the first UE 61 is lost.

In case the VRU application server 20 does not receive such VAM M6 it cannot update the VRU status 50 and therefore triggers the next steps so that the second UE 62 and/or the third UE relay it. However, this step may be optional, and the second UE 62 and/or the third UE may relay the VRU application server 20 independently from the reception or not of a VAM M6 from the first UE 61 which corresponds to the VRU 1. In that case step S1 or S2 is implemented without previously implementing step S0.

The VAM may be for example a message as described in ETSI TS 103 300-2 V2.1.1 (2020-05).

At step S1, the VRU application server 20 determines which vehicles are or will potentially be in the proximity of the VRU 1.

For example, the VRU application server 20 determines:
- the distances between the VRU 1 and the vehicles 2, 3, 4 connected to the VRU service; and/or
- the directions to which heads the vehicles 2, 3, 4 connected to the VRU service.

If at least one of the distances is under a threshold or if one of the directions to which heads the vehicles 2, 3, 4 enables the VRU application server 20 to predict that one of the vehicles 2, 3, 4 will be at a distance under the threshold, the VRU application server 20 may implement step S2 with the vehicles which check this condition, in the example of figure 1 the vehicles are vehicle 2 and vehicle 3.

Any known method can be used to determine that one of the vehicles 2, 3, 4 is at a distance from the first UE 61 under a threshold or will be at a distance from the first UE 61 under the threshold. For example, the VRU application server 20 may use a positioning system, for example, a GPS, to track the position of each vehicles 2, 3, 4. The position of the VRU 1 used to determine these distances may be the last position reported to the VRU application server 20 through the last VAM received.

At step S2, the VRU application server 20 sends a message M1 to the second UE and/or to the third UE through the communications 320 and 330 previously established.

These messages may comprise:
- the VRU status as maintained by the VRU application server 20, that is, the VRU status 50. This is mainly the case when server 22 and/or 23 at least partly replace or duplicate the service provided by the VRU application server 20;
- communication information (also referred to as communication parameters) comprising:
   o authentication information enabling the servers 22 and 23 to implement a connection procedure to the service of the client 21 or simply to secure the transmission of message M3, and
   o information on specific radio resources that may be used to establish a communication link 321 with the first UE 61;
- information related to the action to be performed by the second UE 62 or the third UE. For example, the VRU application server 20 informs the second UE 62 or the third UE to duplicate the functions of the VRU application server 20. Or the VRU application server 20 informs the second UE 62 or the third UE to command the client 21 to update one of the VRU parameters 51 to a value given by the VRU application server 20 (action 1). Or the VRU application server 20 may inform the second UE 62 or the third UE to command the client 21 to compare the value of a VRU parameter 51 given in the information related to the action to be performed with the value of this VRU parameter 51 used by the client 21 and to transmit this value if different (action 2). When the VRU application server 20 commands the second UE 62 or the third UE to replicate or duplicate the functions of the VRU application server 20, the servers 22 and 23 are then autonomous from the VRU application server to perform either action 1 or action 2 depending on the needs. Therefore, only the case of action 1 and action 2 will be described in detail in the following.

At step S3, the first UE 61 and second UE 62 establish a D2D communication channel between them. The D2D communication may be established based on a radio discovery procedure. Indeed, based on the information on the radio resources, the second UE 62 may receive and decode the specific radio resources in which the first UE 61 may broadcast a VAM. If such VAM is received by the second UE 62, the second UE 62 can then establish a communication link with the first UE 61 based on the authentication information either to secure the communication channel between the second UE 62 and the first UE 61 and/or to connect the client 21 to the server 22 supported by the second UE 62.

At step S4, the second UE 62, more specifically the part 22 of the VRU application supported by the second UE 62, sends to the first UE 61 and thus to the client 21 (at an application level) a message M2 through a D2D communication 321. Indeed, once the communication established between the first UE 61 and the second UE 62, the second UE 62 sends a message M2.

In the case of action 1, message M2 contains a value Vi_{update} of at least one of the VRU parameter Pi (P1 or P3). For example, the VRU application server 20 or the server 22 may reassign the ID of the client 21 (that is the application ID of the VRU 1), Vi_{update} is thus the new ID.

In the case of action 2, message M2 contains a value Vi or Vi' of at least one of the VRU parameter Pi (P1 or P3). For example, the VRU application server 20 or the server 22 may update the position of VRU 1. Therefore, M2 contains the position Vi or Vi' actually known by the VRU application server 20 or by the server 22.

At step S5.1, the first UE 61 updates the value Vi" of the VRU parameter Pi locally stored 51 and used by VRU 1 to the new value Vi_{update}. This corresponds to the case of action 1.

At step S5.2, the first UE 61 compares the value Vi" of the VRU parameter Pi locally stored 51 and used by VRU 1 with the value Vi or Vi' sent in M2. This corresponds to the case of action 2. Therefore, the first UE 61 determines if the value Vi or Vi' of the VRU parameter of the VRU status 50, 52, 53 is up to date or not.

At step S6, the first UE 61 sends a message M3 to the second UE 62 via the communication 321, that is, the D2D communication established between the first UE 61 and the second UE 62. Alternatively, M3 may be sent through another communication channel, for example, via a classical cellular phone network.

In case action 1 is performed, M3 may contained a confirmation of the update of Vi" to Vi_{update}.

In case action 2 is performed, if Vi" is equal to Vi or Vi', then M3 may only contain an information specifying such equality. If Vi" is different from Vi or Vi', M3 may comprise either the value Vi" or any information enabling the second UE 62 or the VRU application server 20 to retrieve said value Vi" (for example, the gap between Vi" and Vi or Vi'). Therefore, M3 comprises information related to the value Vi" to which le VRU parameter Pi of the VRU status should be updated.

At step S7.1, the second UE 62 (the part 22 of the VRU application supported by the second UE) sends a message M4 to the VRU application service 20.

This message M4 contains the information transmitted to the second UE 62 by the first UE 61 in the message M3. For example, M4 may contain a confirmation of the update of Vi" to Vi_{update} or information enabling the second UE 62 or the VRU application server 20 to retrieve the value Vi".

At step S7.2, the second UE 62 (the part 22 of the VRU application supported by the second UE) sends a message M5 to the third UE.

When the third UE replaces or duplicates the functions of the VRU application server 20 the message M5 may contain at least the same information than the message M4. In addition or in complementary, when the second UE 62 replaces or duplicates the functions of the VRU application server 20, the server 22 supported by the second UE 62 may transmit to the third UE any information transmitted to the clients of the VRU service by the servers. For example, the server 22 may transmit to the client 23 the group ID of the VRU 1, the information on the radio resources used to establish a D2D communication with the first UE 61, etc.

At step S8, in the case action 1 is performed, that is, the VRU application server 20 or eventually the server 22 (when the second UE 62 replaces or duplicates the functions of the VRU application server 20) commands the client 21 to update the value of a VRU parameter 51 to the given value Vi_{update}, the servers (20 and/or 22 and/or 23) of the VRU application validate that the client 21 has updated the parameter Pi 51 according to the value Vi_{update}.

In the case action 2 is performed, that is, the client 21 informs the servers (20 and/or 22 and/or 23) of the value Vi" used by it, each server (20 and/or 22 and/or 23) of the VRU application updates the status 50, 52, 53 it locally maintains, for example, by replacing the values Vi and/or Vi' by Vi".

At step S9, the clients (21, 22, 23) and servers (20, 22, 23) of the VRU application may perform the VRU avoidance method as described in ETSI TS 103 300-2 V2.1.1 (2020-05) based on the updated parameters Vi_{update} and/or Vj".

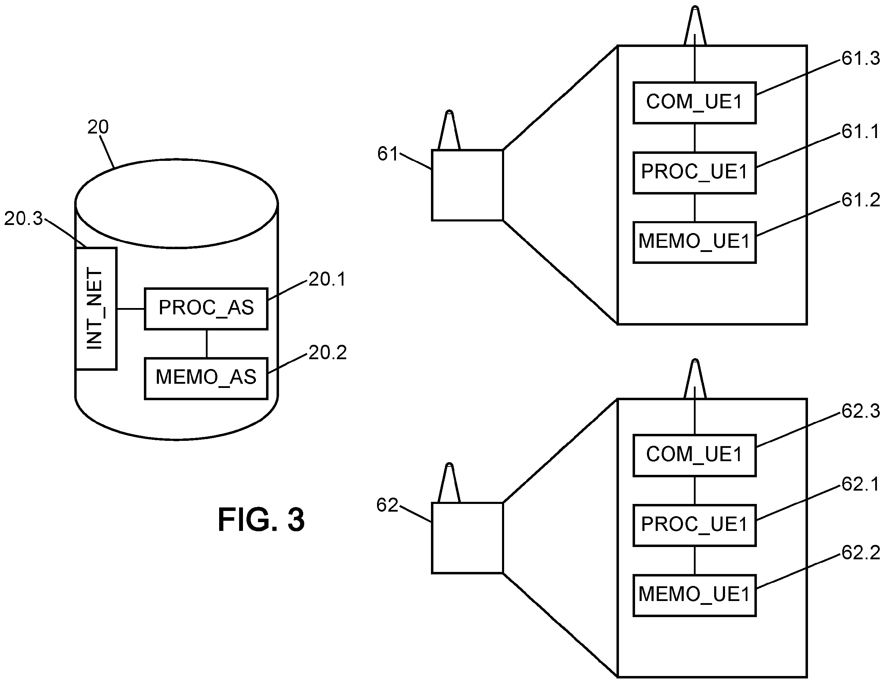

Referring to figure 3, there is shown the VRU application server 20, the first UE 61 and the second UE 62.

The VRU application server 20 comprises a network interface (INT_NET) 20.3, one processing module (PROC_AS) 2.1 and a memory unit (MEMO_AS) 20.2. The MEMO_AS 20.2 comprises a non-volatile unit which retrieves the computer program and a volatile unit which retrieves the VRU status 50 with the different VRU parameter P1, P2, P3 of the VRU 1.

The PROC_UE 20.1 is configured to perform at least the steps S0, S1, S2, S7.1, S8 and S9.

The INT_NET 20.3 is configured to receive and transmit the messages M1 and M4 through the network.

The first UE 61 comprises a communication module (COM_UE1) 61.3, one processing module (PROC_UE1) 61.1 and a memory unit (MEMO_UE1) 61.2. The MEMO_UE1 61.2 comprises a non-volatile unit which retrieves the computer program and a volatile unit which retrieves the VRU parameters 51 P1, P2, P3 used by the first UE 61 when implementing a VRU avoidance method.

The PROC_UE 61.1 is configured to perform at least the steps S3, S4, S5.1, S5.2, S6 and S9.

The COM_UE1 61.3 is configured to receive and transmit the messages M2, M3 and M6 through the network.

The second UE 62 comprises a communication module (COM_UE2) 62.3, one processing module (PROC_UE2) 62.1 and a memory unit (MEMO_UE2) 62.2. The MEMO_UE2 62.2 comprises a non-volatile unit which retrieves the computer program and a volatile unit which retrieves the VRU parameters 51 P1, P2, P3 used by the first UE 61 when implementing a VRU avoidance method.

The PROC_UE 62.1 is configured to perform at least the steps S2, S3, S4, S6, S7.1, S7.2, S8 and S9.

The COM_UE1 62.3 is configured to receive and transmit the messages M1, M2, M3, M4 and M5 through the network.

## Claims

1. Method to relay a vulnerable road user, VRU, application server for updating a vulnerable road user parameter of a VRU carrying a first user equipment, UE, in a vehicle-to-everything, V2X, communication system, comprising:
Receiving (S2) from the VRU application server by a second UE a first message including information related to the VRU parameter of the first UE, said information related to the VRU parameter of the first UE being generated by the application server based on a VRU status of the first UE, said second UE corresponding to a vehicle and being in the V2X communication system ;
Transmitting (S3) by the second UE to a VRU client of the first UE a second message including the information related to the VRU parameter via a device to device communication;
Receiving (S6) by the second UE from the first UE a third message including information related to a value of the VRU parameter of the first UE, wherein based on said information related to the value the VRU parameter is to be updated in the VRU status or based on said information is indicated or confirmed the value to which the VRU parameter has been updated by the first UE.

2. Method according to claim 1 further comprising determining by the application server that the second UE is at a distance from the first UE under a threshold and/or that under a predetermined duration the second UE will be at a distance from the first UE under the threshold.

3. Method according to any one of the previous claims further comprising transmitting (S7.2) by the second UE to a third UE corresponding to another vehicle and being in the V2X communication system a fifth message including information related to the value of the VRU parameter of the first UE.

4. Method according to any one of the previous claims further comprising transmitting (S7.1) by the second UE to the application server a fourth message including information related to the value of the VRU parameter of the first UE.

5. Method according to any one of the previous claims further comprising updating by the first UE the VRU parameter to the value based on the information related to the VRU parameter.

6. Method according to claim 4 further comprising setting by the application server the VRU parameter of a VRU status of the first UE to an updated value based on the information related to the value.

7. Method according to claim 6 wherein the information related to the VRU parameter comprises a previous to update value of the VRU parameter of the VRU status and further comprising comparing by the first UE the previous to update value with the value of the VRU parameter of the first UE.

8. Method according to any one of the previous claims further comprising transmitting by the application server to the second UE and/or to the third UE, the first message when the application server does not receive or does not receive in time from the first UE a sixth message including information related to the VRU parameter of the first UE.

9. Method according to claim 8 wherein the sixth message is a VRU Awareness Messages, VAM.

10. Method according to any one of the previous claims wherein the VRU parameter is one among a position of the VRU, a speed of the VRU, a VRU group ID, UE identification information.

11. Method according to any one of the previous claims wherein the device to device communication is establish based on communication parameters transmitted by the application server.

12. Method according to claim 11 further comprising, based on the communication parameters, the second UE receives a VRU Awareness Messages, VAM from the first UE.

13. A second user equipment, UE, configured to relay a vulnerable road user, VRU. application server for updating a vulnerable road user parameter of a VRU carrying a first user equipment, UE, in a vehicle-to-everything, V2X, communication system, the second UE corresponds to a vehicle and is in the V2X communication system, said second UE comprises:
a processor; and
a non-transitory computer-readable medium comprising instructions stored thereon, which when executed by the processor configure the UE to:
receive a first message including information related to the VRU parameter of the first UE, said information being generated by an application server based on a VRU status of the first UE;
transmit to a VRU client of the first UE a second message including the information related to the VRU parameter via a device to device communication;
receive from the first UE a third message including information related to a value of the VRU parameter of the first UE, wherein based on said information related to the value the VRU parameter is to be updated in the VRU status or based on said information is indicated or confirmed the value to which the VRU parameter has been updated by the another UE.

14. Method to relay a vulnerable road user, VRU, application server for updating a vulnerable road user parameter of a VRU corresponding to a first user equipment, UE, in a vehicle-to-everything, V2X, communication system, comprising:
transmitting by the VRU application server to at least the second UE a message including an information related to the VRU parameter of the first UE based on a VRU status of the first UE, said second UE corresponding to a vehicle and being in the V2X communication system, said information related to the VRU parameter of the first UE being generated by the VRU application server based on a VRU status of the first UE; wherein the message is to be transmitted by the second UE to a VRU client of the first UE,
receiving by the VRU application server from a least the second UE another message including information related to the value of the VRU parameter of the first UE, wherein based on said information related to the value the VRU parameter is to be updated in the VRU status or based on said information is indicated or confirmed the value to which the VRU parameter has been updated by the first UE.

15. A vulnerable road user, VRU, application server configured to relay an application service to a second user equipment, UE, for updating a vulnerable road user parameter of a VRU carrying a first UE in a vehicle-to-everything, V2X, communication system, the UE corresponds to a vehicle and is in the V2X communication system, said VRU application server comprises:
a processor; and
a non-transitory computer-readable medium comprising instructions stored thereon, which when executed by the processor configure the VRU application server to:
transmit at least to the second UE a message including an information related to the VRU parameter of the first UE based on a VRU status of the first UE, said second UE corresponding to a vehicle and being in the V2X communication system, said information related to the VRU parameter of the first UE being generated by the VRU application server based on a VRU status of the first UE, wherein the message is transmitted by the second UE to a VRU client of the first UE, ;
receive from at least the second UE another message including information related to the value of the VRU parameter of the first UE, wherein based on said information related to the value the VRU parameter is to be updated in the VRU status or based on said information is indicated or confirmed the value to which the VRU parameter has been updated by the first UE.

16. Method to relay a vulnerable road user, VRU, application server for updating a vulnerable road user parameter of a VRU carrying a first user equipment, UE, in a vehicle-to-everything, V2X, communication system, comprising:
Receiving by a VRU client of the first UE from a second UE a message including an information related to the VRU parameter of the first UE via a device to device communication, said information being generated by an application server based on a VRU status of the first UE, said second UE corresponding to a vehicle and being in the V2X communication system;
Transmitting by the first UE to the second UE another message including information related to a value of the VRU parameter of the first UE via the device to device communication, wherein based on said information related to the value the VRU parameter is to be updated in the VRU status or based on said information is indicated or confirmed the value to which the VRU parameter has been updated by the first UE.

17. A first user equipment, UE, client of a vulnerable road user, VRU, application server, being carried by a VRU and is in the V2X communication system, said UE comprises:
a processor; and
a non-transitory computer-readable medium comprising instructions stored thereon, which when executed by the processor configure the UE to:
receive at a VRU client of the first UE, from a second UE a message including an information related to a VRU parameter of the UE via a device to device communication, said information being generated by an application server based on a VRU status of the UE, said second UE corresponding to a vehicle and being in the V2X communication system;
transmit by the first UE to the second UE another message including information related to a value of the VRU parameter of the first UE via the device to device communication, wherein based on said information related to the value the VRU parameter is to be updated in the VRU status or based on said information is indicated or confirmed the value to which the VRU parameter has been updated by the first UE.

18. Computer program product comprising code instructions to perform the method according to any one of claims 1 to 12, 14 and 16, when said instructions are run by at least a processor.

## Patentansprüche

1. Verfahren zum Weiterleiten eines Anwendungsservers eines ungeschützten Verkehrsteilnehmers, VRU, zum Aktualisieren eines ungeschützten Verkehrsteilnehmer-Parameters eines VRU, welcher ein erstes Nutzergerät, UE, trägt, in einem Vehicle-to-Everything, V2X, -Kommunikationssystem, umfassend:
Empfangen (S2) von dem VRU-Anwendungsserver, durch ein zweites UE, einer ersten Nachricht, umfassend Informationen in Bezug auf den VRU-Parameter des ersten UE, wobei die Informationen in Bezug auf den VRU-Parameter des ersten UE durch den Anwendungsserver auf Grundlage eines VRU-Status des ersten UE erzeugt werden, wobei das zweite UE einem Fahrzeug entspricht und in dem V2X-Kommunikationssystem ist;
Übertragen (S3), durch das zweite UE an einen VRU-Klienten des ersten UE, einer zweiten Nachricht, umfassend die Informationen in Bezug auf den VRU-Parameter über eine Vorrichtung-zu-Vorrichtung-Kommunikation;
Empfangen (S6), durch das zweite UE von dem ersten UE; einer dritten Nachricht, umfassend Informationen in Bezug auf einen Wert des VRU-Parameters des ersten UE, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das erste UE aktualisiert worden ist, angezeigt oder bestätigt wird.

2. Verfahren nach Anspruch 1, ferner umfassend Bestimmen, durch den Anwendungsserver, dass sich das zweite UE in einem Abstand von dem ersten UE unterhalb eines Schwellenwerts befindet und/oder dass für eine vorbestimmte Dauer sich das zweite UE in einem vorbestimmten Abstand von dem ersten UE unterhalb des Schwellenwerts befinden wird.

3. Verfahren nach einem der vorhergehenden Ansprüche, ferner umfassend Übertragen (S7.2), durch das zweite UE an ein drittes UE, welches einem weiteren Fahrzeug entspricht und in dem V2X-Kommunikationssystem ist, einer fünften Nachricht, welche Informationen in Bezug auf den Wert des VRU-Parameters des ersten UE umfasst.

4. Verfahren nach einem der vorhergehenden Ansprüche, ferner umfassend Übertragen (S7.1), durch das zweite UE an den Anwendungsserver, einer vierten Nachricht, welche Informationen in Bezug auf den Wert des VRU-Parameters des ersten UE umfasst.

5. Verfahren nach einem der vorhergehenden Ansprüche, ferner umfassend Aktualisieren, durch das erste UE, des VRU-Parameters auf den Wert, welcher auf den Informationen in Bezug auf den VRU-Parameter basiert.

6. Verfahren nach Anspruch 4, ferner umfassend Festlegen, durch den Anwendungsserver, des VRU-Parameters eines VRU-Status des ersten UE auf einen aktualisierten Wert auf Grundlage der Informationen in Bezug auf den Wert.

7. Verfahren nach Anspruch 6, wobei die Informationen in Bezug auf den VRU-Parameter einen Wert des VRU-Parameters des VRU-Status vor einem Aktualisieren umfassen und ferner umfassend Vergleichen, durch das erste UE, des Wertes vor einem Aktualisieren mit dem Wert des VRU-Parameters des ersten UE.

8. Verfahren nach einem der vorhergehenden Ansprüche, ferner umfassend Übertragen, durch den Anwendungsserver an das zweite UE und/oder an das dritte UE, der ersten Nachricht, wenn der Anwendungsserver von dem ersten UE eine sechste Nachricht, welche Informationen in Bezug auf den VRU-Parameter des ersten UE umfasst, nicht empfängt oder nicht rechtzeitig empfängt.

9. Verfahren nach Anspruch 8, wobei die sechste Nachricht eine VRU-Aufmerksamkeit-Nachricht, VAM, ist.

10. Verfahren nach einem der vorhergehenden Ansprüche, wobei der VRU-Parameter eines aus einer Position des VRU, einer Geschwindigkeit des VRU, einer VRU-Gruppe-ID und UE-Identifizierungsinformationen ist.

11. Verfahren nach einem der vorhergehenden Ansprüche, wobei die Vorrichtung-zu-Vorrichtung Kommunikation auf Grundlage von Kommunikationsparametern hergestellt wird, welche durch den Anwendungsserver übertragen werden.

12. Verfahren nach Anspruch 11, ferner umfassend, dass, auf Grundlage der Kommunikationsparameter, das zweite UE eine VRU-Aufmerksamkeitsnachricht, VAM, von dem ersten UE empfängt.

13. Zweites Nutzergerät, UE, welches dazu eingerichtet ist, einen Anwendungsserver eines ungeschützten Verkehrsteilnehmers, VRU, zum Aktualisieren eines ungeschützten Verkehrsteilnehmer-Parameters eines VRU weiterzuleiten, welcher ein erstes Nutzergerät, UE, trägt, in einem Vehicle-to-Everything, V2X, -Kommunikationssystem, wobei das zweite UE einem Fahrzeug entspricht und in dem V2X-Kommunikationssystem ist, wobei das zweite UE umfasst:
einen Prozessor; und
ein nicht-transitorisches computerlesbares Medium, welches Anweisungen darauf gespeichert aufweist, welche, wenn sie durch den Prozessor ausgeführt werden, das UE zu folgendem konfigurieren:
Empfangen einer ersten Nachricht, umfassend Informationen in Bezug auf den VRU-Parameter des ersten UE, wobei die Informationen durch einen Anwendungsserver auf Grundlage eines VRU-Status des ersten UE erzeugt werden,
Übertragen, an einen VRU-Klienten des ersten UE, einer zweiten Nachricht, umfassend die Informationen in Bezug auf den VRU-Parameter über eine Vorrichtung-zu-Vorrichtung-Kommunikation;
Empfangen, von dem ersten UE; einer dritten Nachricht, umfassend Informationen in Bezug auf einen Wert des VRU-Parameters des ersten UE, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das weitere UE aktualisiert worden ist, angezeigt oder bestätigt wird.

14. Verfahren zum Weiterleiten eines Anwendungsservers eines ungeschützten Verkehrsteilnehmers, VRU, zum Aktualisieren eines ungeschützten Verkehrsteilnehmer-Parameters eines VRU, welcher einem ersten Nutzergerät, UE, entspricht, in einem Vehicle-to-Everything, V2X, -Kommunikationssystem, umfassend:
Übertragen, durch den VRU-Anwendungsserver an wenigstens das zweite UE, einer Nachricht, umfassend Informationen in Bezug auf den VRU-Parameter des ersten UE, auf Grundlage eines VRU-Status des ersten UE, wobei das zweite UE einem Fahrzeug entspricht und in dem V2X-Kommunikationssystem ist, wobei die Informationen in Bezug auf den VRU-Parameter des ersten UE durch den VRU-Anwendungsserver auf Grundlage eines VRU-Status des ersten UE erzeugt werden; wobei die Nachricht durch das zweite UE an einen VRU-Klienten des ersten UE zu übertragen ist,
Empfangen, durch den VRU-Anwendungsserver von wenigstens dem zweiten UE, einer weiteren Nachricht, umfassend Informationen in Bezug auf den Wert des VRU-Parameters des ersten UE, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das erste UE aktualisiert worden ist, angezeigt oder bestätigt wird.

15. Anwendungsserver eines ungeschützten Verkehrsteilnehmers, VRU, welcher dazu eingerichtet ist, einen Anwendungsdienst an ein zweites Nutzergerät, UE, zum Aktualisieren eines ungeschützten Verkehrsteilnehmer-Parameters eines VRU weiterzuleiten, welcher ein erstes UE trägt, in einem Vehicle-to-Everything, V2X, - Kommunikationssystem, wobei das UE einem Fahrzeug entspricht und in dem V2X-Kommunikationssystem ist, wobei der VRU-Anwendungsserver umfasst:
einen Prozessor; und
ein nicht-transitorisches computerlesbares Medium, welches Anweisungen darauf gespeichert aufweist, welche, wenn sie durch den Prozessor ausgeführt werden, den VRU-Anwendungsserver zu folgendem konfigurieren:
Übertragen, wenigstens an das zweite UE, einer Nachricht, umfassend Informationen in Bezug auf den VRU-Parameter des ersten UE, auf Grundlage eines VRU-Status des ersten UE, wobei das zweite UE einem Fahrzeug entspricht und in dem V2X-Kommunikationssystem ist, wobei die Informationen in Bezug auf den VRU-Parameter des ersten UE durch den VRU-Anwendungsserver auf Grundlage eines VRU-Status des ersten UE erzeugt werden, wobei die Nachricht durch das zweite UE an einen VRU-Klienten des ersten UE übertragen wird;
Empfangen, von wenigstens dem zweiten UE; einer weiteren Nachricht, umfassend Informationen in Bezug auf den Wert des VRU-Parameters des ersten UE, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das erste UE aktualisiert worden ist, angezeigt oder bestätigt wird.

16. Verfahren zum Weiterleiten eines Anwendungsservers eines ungeschützten Verkehrsteilnehmers, VRU, zum Aktualisieren eines ungeschützten Verkehrsteilnehmer-Parameters eines VRU, welcher ein erstes Nutzergerät, UE, trägt, in einem Vehicle-to-Everything, V2X, -Kommunikationssystem, umfassend:
Empfangen, durch einen VRU-Klienten des ersten UE von einem zweiten UE, einer Nachricht, umfassend Informationen in Bezug auf den VRU-Parameter des ersten UE über eine Vorrichtung-zu-Vorrichtung-Kommunikation, wobei die Informationen durch einen Anwendungsserver auf Grundlage eines VRU-Status des ersten UE erzeugt werden, wobei das zweite UE einem Fahrzeug entspricht und in dem V2X-Kommunikationssystem ist;
Übertragen, durch das erste UE an das zweite UE, einer weiteren Nachricht, umfassend Informationen in Bezug auf einen Wert des VRU-Parameters des ersten UE über die Vorrichtung-zu-Vorrichtung-Kommunikation, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das erste UE aktualisiert worden ist, angezeigt oder bestätigt wird.

17. Erstes-Nutzergerät, UE,-Klient eines Anwendungsservers eines ungeschützten Verkehrsteilnehmers, VRU, welches durch einen VRU getragen wird und in dem V2X, - Kommunikationssystem ist, wobei das UE umfasst:
einen Prozessor; und
ein nicht-transitorisches computerlesbares Medium, welches Anweisungen darauf gespeichert aufweist, welche, wenn sie durch den Prozessor ausgeführt werden, das UE zu folgendem konfigurieren:
Empfangen, an einem VRU-Klienten des ersten UE von einem zweiten UE, einer Nachricht, umfassend Informationen in Bezug auf einen VRU-Parameter des UE, über eine Vorrichtung-zu-Vorrichtung-Kommunikation, wobei die Informationen durch einen Anwendungsserver auf Grundlage eines VRU-Status des UE erzeugt werden, wobei das zweite UE einem Fahrzeug entspricht und in dem V2X, - Kommunikationssystem ist;
Übertragen, durch das erste UE an das zweite UE, einer weiteren Nachricht, umfassend Informationen in Bezug auf einen Wert des VRU-Parameters des ersten UE über die Vorrichtung-zu-Vorrichtung-Kommunikation, wobei auf Grundlage der Informationen in Bezug auf den Wert der VRU-Parameter in dem VRU-Status zu aktualisieren ist oder auf Grundlage der Informationen der Wert, auf welchen der VRU-Parameter durch das erste UE aktualisiert worden ist, angezeigt oder bestätigt wird.

18. Computerprogrammprodukt, umfassend Code-Anweisungen, um das Verfahren nach einem der Ansprüche 1 bis 12, 14 und 16 durchzuführen, wenn die Anweisungen durch wenigstens einen Prozessor ausgeführt werden.

## Revendications

1. Procédé pour relayer un serveur d'application d'usager de la route vulnérable, VRU, pour la mise à jour d'un paramètre d'usager de la route vulnérable d'un VRU transportant un premier équipement utilisateur, UE, dans un système de communication de véhicule-à-tout, V2X, comprenant :
la réception (S2), en provenance du serveur d'application de VRU par un deuxième UE, d'un premier message comportant une information relative au paramètre de VRU du premier UE, ladite information relative au paramètre de VRU du premier UE étant générée par le serveur d'application sur la base d'un statut de VRU du premier UE, ledit deuxième UE correspondant à un véhicule et étant dans le système de communication V2X ;
l'émission (S3), par le deuxième UE vers un client de VRU du premier UE, d'un deuxième message comportant l'information relative au paramètre de VRU via une communication de dispositif à dispositif ;
la réception (S6), par le deuxième UE en provenance du premier UE, d'un troisième message comportant une information relative à une valeur du paramètre de VRU du premier UE, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par le premier UE.

2. Procédé selon la revendication 1 comprenant en outre la détermination, par le serveur d'application, que le deuxième UE est à une distance du premier UE inférieure à un seuil et/ou que pendant une durée prédéterminée, le deuxième UE sera à une distance du premier UE inférieure au seuil.

3. Procédé selon l'une quelconque des revendications précédentes comprenant en outre l'émission (S7.2), par le deuxième UE vers un troisième UE correspondant à un autre véhicule et étant dans le système de communication V2X, d'un cinquième message comportant une information relative à la valeur du paramètre de VRU du premier UE.

4. Procédé selon l'une quelconque des revendications précédentes comprenant en outre l'émission (S7.1), par le deuxième UE vers le serveur d'application, d'un quatrième message comportant une information relative à la valeur du paramètre de VRU du premier UE.

5. Procédé selon l'une quelconque des revendications précédentes comprenant en outre la mise à jour, par le premier UE, du paramètre de VRU vers la valeur sur la base de l'information relative au paramètre de VRU.

6. Procédé selon la revendication 4 comprenant en outre le réglage, par le serveur d'application, du paramètre de VRU d'un statut de VRU du premier UE sur une valeur mise à jour sur la base de l'information relative à la valeur.

7. Procédé selon la revendication 6 dans lequel l'information relative au paramètre de VRU comprend une valeur antérieure à la mise à jour du paramètre de VRU du statut de VRU et comprenant en outre la comparaison, par le premier UE, de la valeur antérieure à la mise à jour avec la valeur du paramètre de VRU du premier UE.

8. Procédé selon l'une quelconque des revendications précédentes comprenant en outre l'émission, par le serveur d'application vers le deuxième UE et/ou vers le troisième UE, du premier message lorsque le serveur d'application ne reçoit pas ou ne reçoit pas à temps, en provenance du premier UE, un sixième message comportant une information relative au paramètre de VRU du premier UE.

9. Procédé selon la revendication 8 dans lequel le sixième message est un message de sensibilisation de VRU, VAM.

10. Procédé selon l'une quelconque des revendications précédentes dans lequel le paramètre de VRU est l'un parmi une position du VRU, une vitesse du VRU, un identifiant, ID, de groupe de VRU, une information d'identification d'UE.

11. Procédé selon l'une quelconque des revendications précédentes dans lequel la communication de dispositif à dispositif est établie sur la base de paramètres de communication émis par le serveur d'application.

12. Procédé selon la revendication 11 comprenant en outre, sur la base des paramètres de communication, le deuxième UE reçoit un message de sensibilisation de VRU, VAM, en provenance du premier UE.

13. Deuxième équipement utilisateur, UE, configuré pour relayer un serveur d'application d'usager de la route vulnérable, VRU, pour la mise à jour d'un paramètre d'usager de la route vulnérable d'un VRU transportant un premier équipement utilisateur, UE, dans un système de communication de véhicule-à-tout, V2X, le deuxième UE correspond à un véhicule et est dans le système de communication V2X, ledit deuxième UE comprend :
un processeur ; et
un support non transitoire lisible par ordinateur comprenant des instructions stockées sur celui-ci, qui lors de leur exécution par le processeur, configurent l'UE pour :
recevoir un premier message comportant une information relative au paramètre de VRU du premier UE, ladite information étant générée par un serveur d'application sur la base d'un statut de VRU du premier UE ;
émettre, vers un client de VRU du premier UE, un deuxième message comportant l'information relative au paramètre de VRU via une communication de dispositif à dispositif ;
recevoir, en provenance du premier UE, un troisième message comportant une information relative à une valeur du paramètre de VRU du premier UE, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par l'autre UE.

14. Procédé pour relayer un serveur d'application d'usager de la route vulnérable, VRU, pour la mise à jour d'un paramètre d'usager de la route vulnérable d'un VRU correspondant à un premier équipement utilisateur, UE, dans un système de communication de véhicule-à-tout, V2X, comprenant :
l'émission, par le serveur d'application de VRU vers au moins le deuxième UE, d'un message comportant une information relative au paramètre de VRU du premier UE sur la base d'un statut de VRU du premier UE, ledit deuxième UE correspondant à un véhicule et étant dans le système de communication V2X, ladite information relative au paramètre de VRU du premier UE étant générée par le serveur d'application de VRU sur la base d'un statut de VRU du premier UE ; dans lequel le message doit être émis par le deuxième UE vers un client de VRU du premier UE,
la réception, par le serveur d'application de VRU en provenance d'au moins le deuxième UE, d'un autre message comportant une information relative à la valeur du paramètre de VRU du premier UE, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par le premier UE.

15. Serveur d'application d'usager de la route vulnérable, VRU, configuré pour relayer un service d'application vers un deuxième équipement utilisateur, UE, pour la mise à jour d'un paramètre d'usager de la route vulnérable d'un VRU transportant un premier UE dans un système de communication de véhicule-à-tout, V2X, l'UE correspond à un véhicule et est dans le système de communication V2X, ledit serveur d'application de VRU comprend :
un processeur ; et
un support non transitoire lisible par ordinateur comprenant des instructions stockées sur celui-ci, qui lors de leur exécution par le processeur, configurent le serveur d'application de VRU pour :
émettre, au moins vers le deuxième UE, un message comportant une information relative au paramètre de VRU du premier UE sur la base d'un statut de VRU du premier UE, ledit deuxième UE correspondant à un véhicule et étant dans le système de communication V2X, ladite information relative au paramètre de VRU du premier UE étant générée par le serveur d'application de VRU sur la base d'un statut de VRU du premier UE, dans lequel le message est émis par le deuxième UE vers un client de VRU du premier UE ;
recevoir, en provenance au moins du deuxième UE, un autre message comportant une information relative à la valeur du paramètre de VRU du premier UE, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par le premier UE.

16. Procédé pour relayer un serveur d'application d'usager de la route vulnérable, VRU, pour la mise à jour d'un paramètre d'usager de la route vulnérable d'un VRU transportant un premier équipement utilisateur, UE, dans un système de communication de véhicule-à-tout, V2X, comprenant :
la réception, par un client de VRU du premier UE en provenance d'un deuxième UE, d'un message comportant une information relative au paramètre de VRU du premier UE via une communication de dispositif à dispositif, ladite information étant générée par un serveur d'application sur la base d'un statut de VRU du premier UE, ledit deuxième UE correspondant à un véhicule et étant dans le système de communication V2X ;
l'émission, par le premier UE vers le deuxième UE, d'un autre message comportant une information relative à une valeur du paramètre de VRU du premier UE via la communication de dispositif à dispositif, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par le premier UE.

17. Un premier équipement utilisateur, UE, client d'un serveur d'application d'usager de la route vulnérable, VRU, qui est transporté par un VRU et est dans le système de communication V2X, ledit UE comprend :
un processeur ; et
un support non transitoire lisible par ordinateur comprenant des instructions stockées sur celui-ci, qui lors de leur exécution par le processeur, configurent l'UE pour :
recevoir, au niveau d'un client de VRU du premier UE, en provenance d'un deuxième UE, un message comportant une information relative à un paramètre de VRU de l'UE via une communication de dispositif à dispositif, ladite information étant générée par un serveur d'application sur la base d'un statut de VRU de l'UE, ledit deuxième UE correspondant à un véhicule et étant dans le système de communication V2X ;
émettre, par le premier UE vers le deuxième UE, un autre message comportant une information relative à une valeur du paramètre de VRU du premier UE via la communication de dispositif à dispositif, dans lequel, sur la base de ladite information relative à la valeur, le paramètre de VRU doit être mis à jour dans le statut de VRU ou sur la base de ladite information, est indiquée ou confirmée la valeur vers laquelle le paramètre de VRU a été mis à jour par le premier UE.

18. Produit programme d'ordinateur comprenant des instructions de code pour réaliser le procédé selon l'une quelconque des revendications 1 à 12, 14 et 16, lorsque lesdites instructions sont exécutées par au moins un processeur.
